# EUROPÄISCHE PATENTSCHRIFT

(11) **EP 1 561 980 B1**
(45) Veröffentlichungstag und Bekanntmachung des Hinweises auf die Patenterteilung: **11.04.2007**
(21) Anmeldenummer: 05002305.0
(22) Anmeldetag: 03.02.2005
(51) Int. Cl.: F16K 3/18

(54) **Doppelplattenschieber**
Double plate gate valve
Vanne à tiroir composé de deux plaques

(30) Priorität: 04.02.2004 DE 202004001674 U
(43) Veröffentlichungstag der Anmeldung: 10.08.2005
(73) Patentinhaber: Z&J Technologies GmbH, 52355 Düren (DE)
(72) Erfinder: Brzoska, Ekkehard, 45472 Mülheim (DE); Marx, Norbert, 52355 Düren (DE); Heller, Friedel, 52393 Hürtgenwald (DE)
(74) Vertreter: Popp, Eugen

(56) Entgegenhaltungen:
- EP-A- 0 450 646
- WO-A-98/17934
- GB-A- 390 711
- GB-A- 713 699
- US-A- 2 148 628
- US-A- 3 018 789
- US-A- 3 314 442
- US-A- 4 124 194
- US-A- 4 401 292

## Beschreibung

Die vorliegende Erfindung betrifft einen Doppelplattenschieber gemäß dem Oberbegriff des Anspruchs 1.

Doppelplattenschieber dieser Art sind bekannt und werden als Flach-, Oval- und Rundschieber angeboten.

Doppelplattenschieber kommen meist dann zur Anwendung, wenn in der Offenstellung des Schiebers eine Abdichtung seines Durchflußraumes gegenüber dem übrigen Gehäuseinnenraum verlangt wird. Dies ist insbesondere dann der Fall, wenn es sich um einen Gasstrom mit Verunreinigungen aus sublimierenden Stoffen handelt, weil diese sich sonst in nicht abgeschlossenen Gehäuseteilen anlagern und zu einer Verstopfung und somit zu einer Behinderung der Schieberbetätigung führen können. Doppelplattenschieber werden aus denselben bzw. ähnlichen Gründen bei staubhaltigen Gasen oder auch bei stark verschmutzten flüssigen Medien eingesetzt, wie beispielsweise in Kohlevergasungsanlagen, Verbrennungsanlagen, Verkokungsanlagen, chemischen Anlagen, Pipelines oder dergleichen.

Doppelplattenschieber gemäß dem Oberbegriff des Anspruchs 1 sind, wie vorstehend erwähnt, bekannt. So ist beispielsweise aus der DE-C-868543 ein Doppelplattenschieber bekannt, dessen Rohrbrücke sich aus einem elastischen Wellrohr mit stirnseitig angeordneten Dichtringen zusammensetzt. Die Rohrbrücke ist in einem rohrförmigen Gehäuseteil einer Schieberplatte untergebracht, welches gleichzeitig zur Halterung und Führung der Rohrbrücke dient. In der Offenstellung des Schiebers werden die Gleitringe durch die Elastizität des Wellrohrs sowie durch die Spreizwirkung einer Keilvorrichtung gegen die Gehäusedichtsitze angepreßt.

Diese bekannte Konstruktion hat den Nachteil, daß zur Erzielung einer ausreichend hohen Dichtigkeit die Vorspannung des elastischen Wellrohres relativ hoch eingestellt sein muß. Die Folge ist, daß beim Verschieben der Rohrbrücke deren Dichtringe mit einer relativ großen Anpreßkraft an den gegenüberliegenden Dichtsitzen des Schiebergehäuses entlang gleiten. Dadurch entsteht eine beträchtliche Reibung zwischen den anliegenden Dichtflächen, so daß erhebliche Betätigungskräfte zum Umschalten des Schiebers erforderlich sind. Auch ist der Verschleiß an den Dichtflächen entsprechend hoch.

Zur Vermeidung dieser Nachteile wird in der DE-U-8008316 vorgeschlagen, die Dichtringe der Rohrbrücke an einer Verlängerung der Betätigungsstange für die Schieberplatte aufzuhängen und mit einer Rückstellvorrichtung zu versehen. Die Rückstellvorrichtung weist an den Dichtringen befestigte Rollen auf, welche auf im Gehäuse angebrachten Betätigungsleisten mit im Bereich des Schieberdurchganges angeordneten Einlaufnuten für die Rollen laufen. Diese kombinierte Spreiz- und Lösevorrichtung soll zum einen eine sichere Anpressung der Dichtringe in der Offenstellung des Schiebers und zum anderen die freie Beweglichkeit der Rohrbrücke entlang der beiden Gehäusedichtsitze beim Betätigen des Schiebers gewährleisten.

Dies wird bei vorgenanntem Doppelplattenschieber jedoch nur durch einen sehr hohen konstruktiven Aufwand erreicht. So wird z.B. vorgeschlagen, die Absperrplatten der Schieberplatte mit Rollen zu versehen, die in Schließstellung in die Einlaufnuten der Betätigungsleisten laufen, um vor allem bei hohen Differenzdrücken ein Verschieben der Absperrplatten mit geringst möglicher Reibung und ohne Beschädigung der Dichtflächen zu ermöglichen. Bei einem derartigen Doppelplattenschieber müssen viele einzelne Bauteile hinsichtlich ihres Bewegungsablaufes aufeinander abgestimmt werden, wodurch höchste Präzision bei der Herstellung eines solchen Doppelplattenschiebers gefordert ist. Eine hohe Anzahl von Verschleißteilen sowie wartungsintensiven Teilen, d.h. Teilen, die nach vorbestimmter Gebrauchsdauer einer gesonderten Reinigung bedürfen, verteuern den Einsatz eines solchen Doppelplattenschiebers.

Ein Doppelplattenschieber der vorbeschriebenen Art mit einer reduzierten Anzahl von Bauteilen, der eine unverändert hohe Dichtigkeit zwischen den Dichtringen der Rohrbrücke und den zugeordneten Dichtsitzen des Schiebergehäuses bei Schieber-Offenstellung gewährleisten soll, ist in der EP 0 450 646 A2 offenbart. Dieser Doppelplattenschieber weist eine Rohrbrücke auf, welche zwei durch einen Kompensator miteinander verbundene Dichtringe aufweist, die in der Offenstellung des Schiebers unter elastischen Vorspannung gegen die Dichtsitze des Schiebergehäuses preßbar sind. Der Kompensator umfaßt einen wellig gebogenen Rohrabschnitt mit einer sich über den Umfang erstreckenden Einbuchtung, wobei der wellig gebogene Rohrabschnitt als äußerer Rohrabschnitt sich koaxial über einen inneren Rohrabschnitt erstreckt, der nur mit einem der beiden Dichtringe fest verbunden ist. Gegenüber dem anderen Dichtring ist dieser Rohrabschnitt axial beweglich. Diese Konstruktion hat sich bewährt, bedarf jedoch nach wie vor einer gewissen Pflege, wobei zur Wartung meist die gesamte Rohrbrücke aus dem Schieber ausgebaut werden muß, was hohe Kosten sowohl hinsichtlich Personal als auch aufgrund langer Stillstandszeiten verursacht.

Aufgabe der vorliegenden Erfindung ist es, einen Doppelplattenschieber anzugeben, der bei einer unverändert hohen Dichtigkeit zwischen Dichtringen der Rohrbrücke bzw. der Absperrplatten und zugeordneten Gehäusedichtsitzen des Schiebergehäuses eine möglichst einfache, kostengünstige und wartungsfreundliche Konstruktion aufweist.

Diese Aufgabe wird durch einen Doppelplattenschieber mit den Merkmalen des Anspruchs 1 gelöst, wobei bevorzugte Weiterentwicklungen und Ausführungsformen in den Unteransprüchen beschrieben sind.

Ein wesentlicher Punkt der Erfindung ist demnach, daß wenigstens einer der beiden Gehäusedichtsitze in Offenstellung des Schiebers durch die Wirkung eines elastischen Elements gegen den bzw. die der Rohrbrücke zugeordneten Dichtring(e) und in Geschlossenstellung des Schiebers gegen den Umfangsrand der Absperrplatte(n) unter vorbestimmtem Druck gepreßt ist. Dadurch ist bei einfacher Konstruktion und niedrigen Wartungskosten eine, im Vergleich zum Stand der Technik, zumindest gleichbleibend gute bzw. sogar verbesserte Dichtwirkung gewährleistet.

Ein weiterer wesentlicher Punkt der Erfindung ist, daß das elastische Element und der Dichtsitz zu einer, als ein Bauteil handhabbaren Sitzeinheit kombiniert sind, die mit dem Schiebergehäuse verbindbar ist. Dadurch ist die Erfindung besonders montage- bzw. demontagefreundlich, da die komplette Sitzeinheit montiert bzw. demontiert werden kann. Da auf diese Weise eine separate Montage bzw. Demontage des elastischen Elements und des Dichtsitzes entfällt, müssen weniger Bauteile gehandhabt werden, so dass die Montage bzw. Demontage erheblich vereinfacht und beschleunigt wird.

In einer bevorzugten Ausführungsform umfaßt das elastische Element wenigstens drei gleichmäßig über den Umfang des Gehäusedichtsitzes bzw. der Gehäusedichtsitze verteilt angeordnete Feder-, insbesondere Tellerfederpakete. Die gleichmäßige Verteilung mindestens dreier Federpakete über den Umfang des Gehäusedichtsitzes bzw. der Gehäusedichtsitze stellt eine gleichmäßige Dichtwirkung über den gesamten Umfang des Gehäusedichtsitzes sicher. Tellerfedern haben zusätzlich den Vorteil, daß sie robust und preisgünstig in der Herstellung sind.

In einer weiteren bevorzugten Ausführungsform ist bzw. sind wenigstens die Innenseiten eines oder beider am Schiebergehäuse angeschlossenen Rohrstutzen und/oder der Rohrbrücke, d.h. also mindestens deren dem durch den Doppelplattenschieber strömenden Medium zugewandte Seite(n) gehärtet oder mit einer verschleiß- und korrosionsfesten Hartpanzerung versehen. Dies stellt sicher, daß die mit dem durch den Rohrbrückenschieber strömenden Medium in Kontakt kommenden Flächen einem möglichst geringen Verschleiß unterliegen. Dies ist insbesondere bei aggressiven Flüssigkeiten und/oder Gasen von Vorteil.

Wenigstens einer der den Absperrplatten zugewandten Umfangsränder der Rohrstutzen ist vorzugsweise als Schneidkante ausgebildet. Dies ermöglicht es, Verunreinigungen auf den Absperrplatten bzw. auf der Rohrbrücke beim Öffnen bzw. Schließen des Schiebers in einer einfachen Art und Weise zu entfernen.

Vorzugsweise ist zwischen Gehäusedichtsitz und Schneidkante Spül- bzw. Sperrdampf über einen Spül- und Sperrdampfkanal einleitbar. Der Spül- bzw. Sperrdampf löst Ablagerungen sowohl von der Schneidkante/ den Schneidkanten als auch von den Dichtsitzen.

In einer weiteren bevorzugten Ausführungsform ist bzw. sind der bzw. die Gehäusedichtsitze relativ zum zugeordneten Rohrstutzen parallel zu dessen Erstreckungsrichtung bzw. axial bewegbar ausgebildet. Ferner ist vorzugsweise wenigstens einer der Gehäusedichtsitze entfernbar und somit austauschbar ausgebildet, wobei nach Entfernung eines Gehäusedichtsitzes ein Zugriff auf das elastische Element möglich ist. Eine solche Konstruktion stellt eine einfache und kostengünstige Wartung des Schiebers sicher; Teile, die eventuell ausgetauscht werden müssen, wie der Gehäusedichtsitz oder aber auch die elastischen Elemente, sind leicht zugänglich und können schnell ausgetauscht werden.

Bei Anordnung von zwei Absperrplatten sind diese in der geschlossenen Stellung des Schiebers bevorzugt über mittels einer Kugel zentrierte Keilstücke gegen die zugeordneten Dichtflächen preßbar. Ein solches Keilprinzip gewährleistet mit einfachen Mitteln eine zuverlässige Dichtwirkung.

Eine den Absperrplatten zugeordnete Betätigungsstange erstreckt sich in einer weiteren bevorzugten Ausführungsform fluiddicht in das Schiebergehäuse hinein, was es ermöglicht, den Schieberinnenraum mit Druck (beispielsweise Druckgas, Spül- oder Sperrdampf) zu beaufschlagen.

Am Schiebergehäuse ist vorzugsweise wenigstens ein Anschluß zur Verbindung mit einer Druckgas- oder Spül- bzw. Sperrdampfquelle vorgesehen, über den Druckgas oder Spül- bzw. Sperrdampf zum Spülen bzw. zur zusätzlichen Abdichtung des Schiebergehäuses bereitstellbar ist. Durch den Spül- bzw. Sperrdampf wird eine einfache Reinigung des Schiebers ermöglicht, die Beaufschlagung mit Druckgas wiederum ermöglicht eine noch bessere und zuverlässigere Dichtwirkung.

In einer weiteren bevorzugten Ausführungsform weist das Schiebergehäuse wenigstens eine durch einen Deckel verschließbare Wartungsöffnung auf. Dadurch gestaltet sich die Wartung des Schiebers einfach und zeitsparend.

In einer bevorzugten Ausführungsform der Erfindung umfasst die Sitzeinheit einen mit dem Schiebegehäuse verbindbaren Ringeinsatz, in dem das elastische Element und der Dichtsitz angeordnet sind. Der Ringeinsatz gestattet eine besonders einfache und robuste Kombination des elastischen Elements und des Dichtsitzes. Da überdies das elastische Element und der Dichtsitz in dem Ringeinsatz vormontiert werden können, bedeutet diese Ausführungsform eine weitere Vereinfachung des Montageprozesses.

Der Ringeinsatz kann einen Aufnahmeraum für das elastische Element aufweisen, wobei eine im Querschnitt im Wesentlichen radial erstreckte Wandung des Aufnahmeraumes durch den Dichtsitz gebildet ist, der als Anschlagfläche für das elastische Element wirkt. Die zumindest abschnittsweise Begrenzung des Aufnahmeraumes für das elastische Element durch den Dichtsitz ermöglicht eine direkte Verbindung des elastischen Elementes mit dem Dichtsitz und führt zu einer besonders kompakten Bauweise des Ringeinsatzes und somit des Gehäuses im Bereich des Rohrstutzens.

Ferner kann eine im Querschnitt im Wesentlichen axial erstreckte Wandung des Aufnahmeraumes für das elastische Element durch einen Gehäusering gebildet sein, der den jeweiligen Rohrstutzen in Umfangsrichtung zumindest abschnittsweise begrenzt. Der Gehäusering ermöglicht ebenfalls eine besonders kompakte Bauweise des Schiebers, da dadurch das im Ringeinsatz gelagerte elastische Element nahe an der Innenfläche des Rohrstutzens angeordnet sein kann.

In einer weiteren bevorzugten Ausführungsform der Erfindung weist der Ringeinsatz einen Aufnahmeraum für den Dichtsitz auf, wobei eine Durchtrittsöffnung im Aufnahmeraum für den Dichtsitz vorgesehen ist, die eine Wirkverbindung zwischen dem Dichtsitz und dem elastischen Element ermöglicht. Die Durchtrittsöffnung hat den Vorteil, dass das elastische Element und der Dichtsitz unmittelbar, ohne Zwischenschaltung weiterer Übertragungselemente, zusammenwirken, so dass die Sitzeinheit konstruktiv einfach und robust aufgebaut ist.

Vorzugsweise weist der Dichtsitz einen Führungsring und einen konzentrisch angeordneten Dichtring auf, wobei der Dichtring und der Führungsring lösbar verbunden sind. Der Führungsring und der Dichtring ermöglichen eine Entkopplung der Führungs- und Dichtfunktionen des Dichtsitzes. Dabei kann der Führungsring zur axialen Führung des Dichtsitzes im Ringeinsatz bei der Übertragung der vom elastischen Element auf den Dichtsitz ausgeübten Federkraft verwendet werden, während der Dichtring im wesentlichen nur die Dichtigkeit zwischen dem Gehäuse und der Rohrbrücke bzw. der jeweiligen Absperrplatte gewährleistet. Da die beiden Bauteile, Führungsring und Dichtring, getrennt und speziell auf ihre Funktion abgestimmt bearbeitet werden können, insbesondere im Hinblick auf die Bearbeitung der Führungs- und Dichtflächen, wird die Herstellung des Dichtsitzes insgesamt erleichtert. Außerdem kann der besonders starkem Verschleiß ausgesetzte Dichtring einfach vom Führungsring abgenommen werden, wenn dies zu Reparaturzwecken bzw. bei Wartungsarbeiten erforderlich ist, ohne daß die gesamte Sitzeinheit ausgebaut werden muß.

Der Ringeinsatz kann ferner wenigstens eine Bohrung zur Verbindung mit einem Spül- oder Sperrdampfanschluß aufweisen, so daß die Sitzeinheit, d.h. der Ringeinsatz und das darin angeordnete elastische Element sowie der Dichtsitz mit Druckgas zur Spülung bzw. zur Verbesserung der Dichtigkeit beaufschlagt werden kann.

Die Erfindung wird nachfolgend in Hinsicht auf weitere Vorteile und Merkmale beispielhaft und unter Bezugnahme auf die beiliegenden Zeichnungen beschrieben. Die Zeichnungen zeigen in:
- Fig. 1: einen Doppelplattenschieber nach einem Ausführungsbeispiel im Längsschnitt;
- Fig. 2: den Schieber nach Fig. 1 in Draufsicht und Halbschnittdarstellung;
- Fig. 3: einen Schnitt durch den in Fig. 1 dargestellten Schieber längs der Linie X-X;
- Fig. 4: eine Detailansicht des in Fig. 1 mit "Y" gekennzeichneten Ausschnitts, insbesondere einen Dichtsitz;
- Fig. 5: eine erfindungsgemäße Weiterentwicklung des Dichtsitzes nach Fig. 4.;
- Fig. 6: einen Plattenkorb im Längsschnitt für einen Doppelplattenschieber nach einem erfindungsgemäßen Ausführungsbeispiel; und
- Fig. 7: einen Plattenkorb nach dem Stand der Technik.

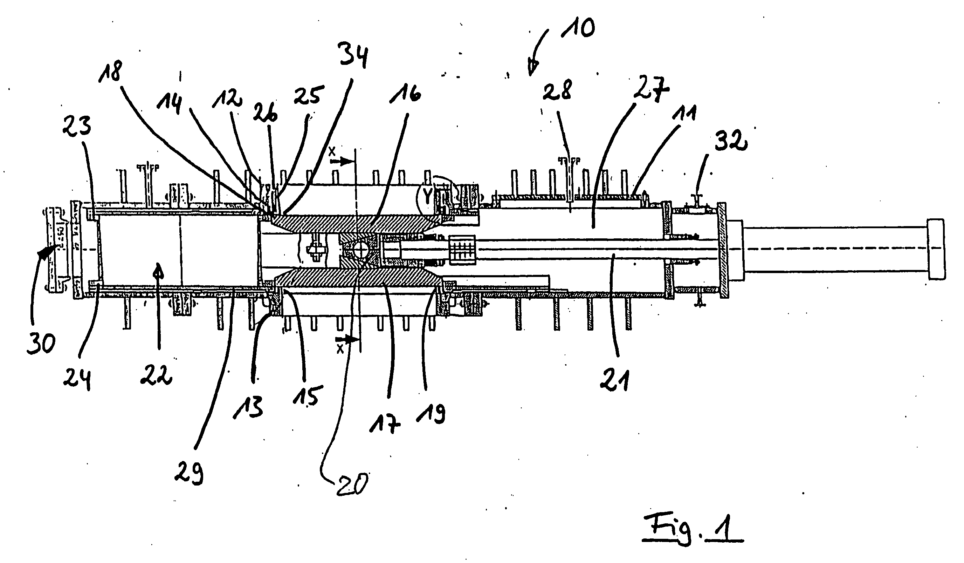

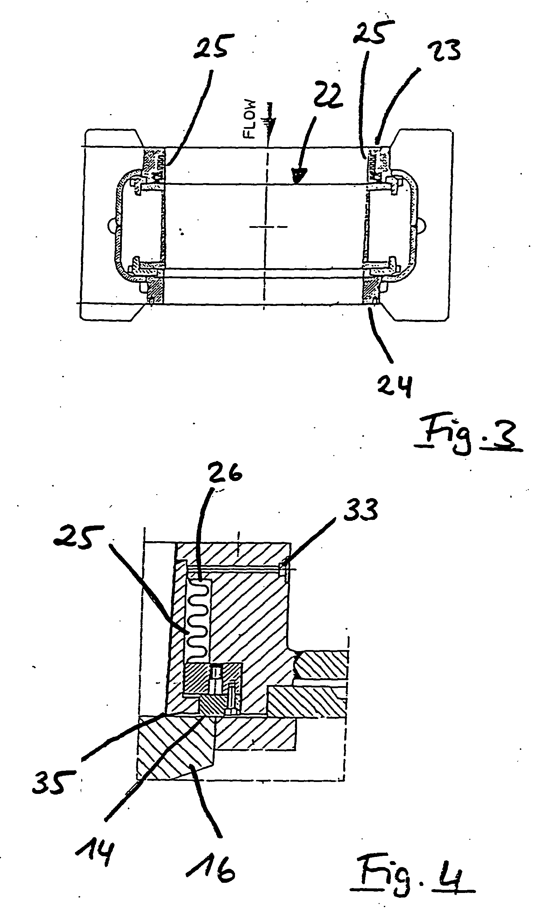

In den Figuren 1, 2 und 3 ist eine Ausführungsform eines erfindungsgemäßen Doppelplattenschiebers 10 in verschiedenen Ansichten dargestellt. Zusätzlich ist in Fig. 4 eine Detailansicht des in Fig. 1 mit Y gekennzeichneten Bereiches gegeben.

Der dargestellte Doppelplattenschieber 10 weist ein Schiebergehäuse 11 mit einem oberen und einem unteren Rohrstutzen 12, 13 sowie einem oberen und einem unteren Gehäusedichtsitz 14, 15 auf, zwischen denen eine obere und eine untere Absperrplatte 16, 17 mit einem oberen bzw. einem unteren Dichtring 18, 19 verschiebbar angebracht sind. Die beiden Absperrplatten 16, 17 sind gegen die Gehäusedichtsitze 14, 15 mit Hilfe eines als Spreizorgan wirkenden Innenkeils 20 andrückbar, welcher am Ende einer Betätigungsstange 21 sitzt und mit dieser fest verbunden ist. Die Absperrplatten 16, 17 sind dazu durch den Innenkeil 20, der mittels einer Kugel zentriert ist, nach einem "Keil-im-KeilPrinzip" spreizbar. Diese Konstruktion stellt sicher, daß der Schieber auch unter schwierigsten thermischen und dynamischen Bedingungen leicht zu betätigen ist. Ein Verklemmen ist nicht möglich, da der Innenkeil 20 eine nicht selbsthemmende Form aufweist.

Neben den Absperrplatten 16, 17 und dem Innenkeil 20 ist eine Rohrbrücke 22 angeordnet, die einen oberen und einen unteren Dichtring 23, 24 aufweist. Die Rohrbrücke 22 ist hohlzylindrisch ausgebildet, d.h. sie weist insbesondere in ihrer Innenseite keine Wellungen auf, so daß sich keine dadurch bedingten Strömungsverluste ausbilden (vgl. hierzu auch Fig. 3).

Einen wesentlichen Punkt des beschriebenen Doppelplattenschiebers 10 stellt ein elastisches Element in Form von Tellerfederpaketen 25 dar. Die Tellerfederpakete 25 sind am oberen Rohrstutzen 12 an dessen Innenseite zwischen dem oberen Gehäusedichtsitz 14 und einer zum oberen Rohrstutzen 12 gehörenden Auflagefläche 26 angeordnet. Zum besseren Verständnis und aufgrund der besseren Übersichtlichkeit sei an dieser Stelle auf die Detail-Ansicht in Fig. 4 verwiesen. Durch die Tellerfederpakete 25 wird der obere Gehäusedichtsitz 14, der relativ zum oberen Rohrstutzen 12 parallel zu dessen Erstreckungsrichtung bzw. axial beweglich bzw. verschiebbar ausgebildet ist, je nach Schieberstellung gegen den Umfangsrand der oberen Absperrplatte 16 oder den oberen Dichtring 23 der Rohrbrücke 22 gedrückt.

Die Tellerfederpakete 25 sind gleichmäßig über den gesamten Umfang des oberen Gehäusedichtsitzes 14 bzw. des oberen Rohrstutzens 12 verteilt, um eine sichere Schließfunktion des Doppelplattenschiebers 10 durch ein gleichmäßiges Andrücken des oberen Gehäusedichtsitzes 14 an die obere Absperrplatte 16 bzw. deren Dichtring 18 (im geschlossenen Zustand des Schiebers) bzw. an den oberen Dichtring 23 der Rohrbrücke 22 (in Schieber-Offenstellung) zu gewährleisten.

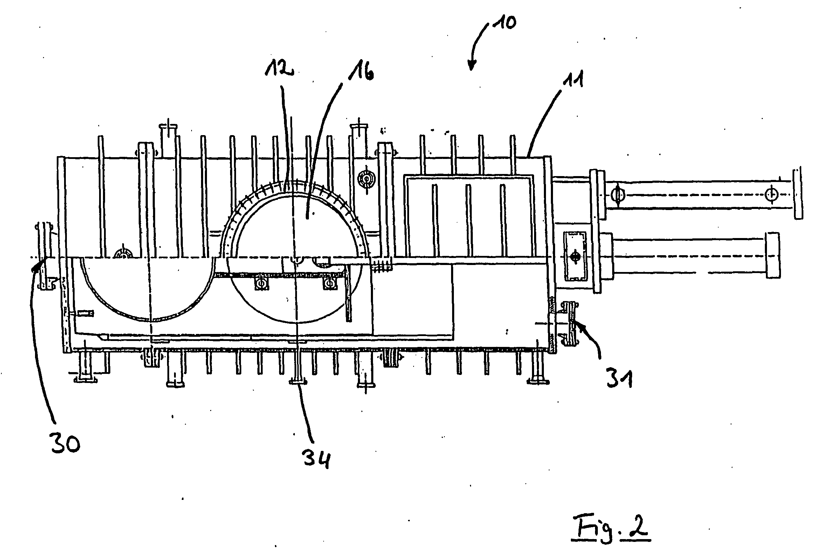

In den Figuren 1 und 2 ist der Schieber in Schließstellung dargestellt. Das Schiebergehäuse 11 ist nach außen fluiddicht ausgebildet, so daß im Inneren 27 des Schiebergehäuses ein Gasdruck einstellbar ist, der auch größer sein kann als der Druck im Schieberdurchgang. Aus diesem Grunde erstreckt sich die Betätigungsstange 21 fluiddicht in das Schiebergehäuse 11 hinein. Am Schiebergehäuse 11 ist ein Anschluß 28 zur Verbindung mit einer (nicht dargestellten) Druckgasquelle, insbesondere einer Spül- und Sperrdampfquelle, angeordnet. Durch eine kontinuierliche Spülung des Inneren 27 des Schiebergehäuses 11 wird das Anbacken von Verschmutzungen und eine daraus resultierende Störung im Schieber und in der mit dem Schieber versehenen Anlage vermieden. Die Dichtflächen der Dichtringe 23, 24 einerseits und die Gehäusedichtsitze 14, 15 andererseits sind jeweils sich parallel zur Schieberbetätigungsrichtung erstreckend ausgebildet. Zur Erhöhung der Verschleißfestigkeit sind die Vorgenannten in an sich bekannter Art und Weise gehärtet bzw. gepanzert.

Die Absperrplatten 16, 17 sind in einen brillenförmigen Plattenkäfig (in den Figuren nicht dargestellt), der deren Halterung sicherstellt, beweglich eingelegt. Dieser Plattenkäfig ist zwischen Leitplatten 29 geführt, womit ein Eindringen von Verunreinigungen ins Gehäuse vermieden wird.

Durch Wartungsöffnungen 30, 31 ist es möglich, insbesondere zur Rohrbrücke 22 einen leichten Zugang zu Beobachtungszwecken o.ä. zu erhalten. Die Wartungsöffnungen 30, 31 sind bei Betrieb der Anlage, in die der Schieber integriert ist, im Normalfall mit Blindflanschen bzw. Gehäusedeckeln versehen, um so das Gehäuse, wie vorstehend beschrieben, mit Druckgas oder Sperr- bzw. Spüldampf beaufschlagen zu können.

Über einen Kühlmitteleinlaß 32 kann die Betätigungsstange 21, insbesondere an ihrem aus dem Gehäuse ragenden Ende, gekühlt werden. Dies geschieht vorzugsweise durch kalte Luft bzw. kalte Gase. An dieser Stelle sei erwähnt, daß auch eine Flüssigkeitskühlung denkbar ist.

In Fig. 3 ist der Doppelplattenschieber 10 in seiner geöffneten Stellung entlang einer Schnittlinie X-X der Fig. 1 dargestellt. Hier wird deutlich ersichtlich, daß die Rohrbrücke 22 den oberen Rohrstutzen 12 ohne Verjüngung des Querschnitts mit dem unteren Rohrstutzen 13 verbindet. Zusätzlich zu den Dichtringen 23, 24 und den Gehäusedichtsitzen 14, 15 empfiehlt es sich, auch die gesamte Innenseite der Rohrbrücke 22 zu härten bzw. zu panzern, um somit abrasivem Verschleiß vorzubeugen.

Der in Fig. 1 mit Y markierte Ausschnitt ist in Fig. 4 in Vergrößerung dargestellt. In dieser kann man deutlich einen Spül- und Sperrdampfkanal 33 erkennen, der an einem Anschlußstutzen 34 (s. Fig. 2) mit einer Spül- und Sperrdampfquelle verbunden ist. Weiterhin kann man in Fig. 4 eine Schneidkante 35 erkennen, die zur Beseitigung von anhaftenden Ablagerungen dient. Diese ist hartgepanzert. Alternativ wäre auch eine gehärtete Schneidkante 35 denkbar. Die Schneidkante 35 erstreckt sich auf der Innenseite des oberen Rohrstutzens 12 über dessen gesamten Umfang bzw. dessen gesamten Umfangsrand und liegt im geschlossenen Zustand des Schiebers 10 auf der oberen Absperrplatte 16 auf. Es sei angemerkt, daß eine Schneidkante bei Bedarf selbstverständlich auch am unteren Rohrstutzen 13 angebracht werden kann.

Zu Zwecken der leichteren Wartung und der schnelleren Wiederinbetriebnahme nach Wartungen ist der Gehäusedichtsitz 14 austauschbar vorgesehen, so daß sowohl der Austausch des Gehäusedichtsitzes 14 als auch der darunter liegenden Tellerfederpakete 25 schnell und mit geringem Personalaufwand realisiert werden kann. Bei Bedarf kann auch der untere Gehäusedichtsitz 15 austauschbar vorgesehen werden. Ferner sei an dieser Stelle angemerkt, daß selbstverständlich, wiederum bei Bedarf, auch am unteren Rohrstutzen 13 ein beweglicher (unterer) Gehäusedichtsitz 15 und zugeordnete elastische Elemente, vorzugsweise in Form von Tellerfederpaketen, die gleichmäßig über den Umfang des unteren Gehäusedichtsitzes 15 verteilt sind, angeordnet sein können.

Es sei ferner angemerkt, daß der Spül- bzw. Sperrdampf, der über den Spül- und Sperrdampfkanal 33 eingespeist wird, zwischen dem oberen Gehäusedichtsitz 14 und der Schneidkante 35 eingeleitet wird, so daß Ablagerungen einerseits an der Schneidkante 35, und andererseits je nach Stellung des Schiebers an der oberen Absperrplatte 16 oder dem Rohranschluß der Rohrbrücke 22 gelöst werden können.

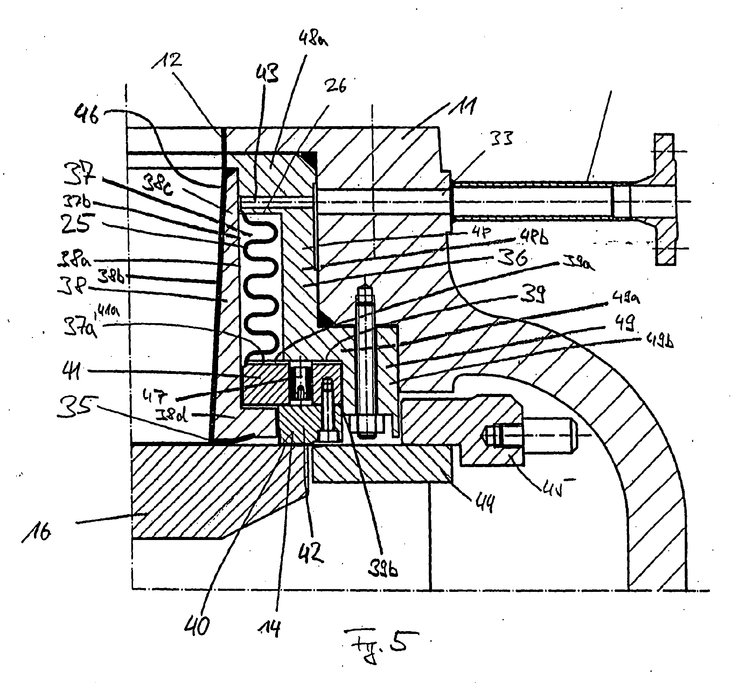

In Fig. 5 ist ein Gehäuseausschnitt im Bereich des im Betriebszustand oberen Rohrstutzens 12 dargestellt, in dem ein im Hinblick auf die Montage- bzw. Demontagefreundlichkeit erfindungsgemäß weiterentwickelter Dichtsitz 14, 15 angeordnet ist. Der diesem erfindungsgemäßen Ausführungsbeispiel zugrunde liegende Gedanke beruht wesentlich darauf, dass das elastische Element und der Dichtsitz zu einer Sitzeinheit kombiniert sind, die mit dem Schiebergehäuse 11 verbunden, beispielsweise verschraubt werden kann. Zur Montage bzw. Demontage wird die komplette Sitzeinheit ein- bzw. ausgebaut, was zu einer Vereinfachung der Montage bzw. Demontage des angefederten Dichtsitzes führt.

Dazu weist der Doppelplattenschieber 10 einen gehäuseseitig durch zwei Rohrstutzen 12, 13 begrenzten Fluiddurchgang auf, in den zum Öffnen des Doppelplattenschiebers 10 eine Rohrbrücke 22 und zum Schließen des Doppelplattenschiebers 10 zwei Absperrplatten 16, 17 bewegbar sind, wobei das mit der Rohrbrücke 22 bzw. den Absperrplatten 16, 17 zusammenwirkende Ende wenigstens eines der beiden Rohrstutzen 12, 13 einen Dichtsitz 14, 15 aufweist, der durch die Federkraft eines elastischen Elementes 25 gegen die Rohrbrücke 22 bzw. die Absperrplatten 16, 17 elastisch vorgespannt ist, und wobei das elastische Element 25 und der Dichtsitz 14, 15 zu einer Sitzeinheit kombiniert sind, die mit dem Schiebergehäuse 11 verbindbar ist.

Unter Sitzeinheit wird dabei eine das elastische Element 25 und den Dichtsitz 14, 15 umfassende Einheit verstanden, die als ein Bauteil gehandhabt wird. Dabei kann die Sitzeinheit nur aus dem elastischen Element 25 und dem Dichtsitz 14, 15 bestehen oder ein das elastische Element 25 und den Dichtsitz 14, 15 integrierendes Bauteil umfassen.

Eine besonders einfache und robuste Ausführung der Sitzeinheit wird durch einen Ringeinsatz 36 geschaffen, in dem das elastische Element 25 und der Dichtsitz 14 angeordnet sind. Die Erfindung ist nicht auf den in Figur 5 dargestellten Ringeinsatz 36 beschränkt, sondern umfasst auch andere Ausgestaltungen der Sitzeinheit, die eine Kombination des elastischen Elements und des Dichtsitzes gestatten. Diese abweichenden Ausgestaltungen können beispielsweise durch bauliche Vorgaben bedingt sein, die sich aus der Gehäusegestaltung unterschiedlicher Schiebertypen ergeben.

Der erfindungsgemäße Dichtsitz kann auch bei Einplattenschieber und generell bei Schiebern eingesetzt werden, bei denen es auf eine gute Dichtigkeit im Bereich der/des Rohrstutzens verbunden mit einer verbesserten Montage- bzw. Demontagefreundlichkeit ankommt.

Der Ringeinsatz 36 ist im Rohrstutzengehäuse nahe der in Figur 5 dargestellten Absperrplatte 16 (Schließstellung) angeordnet, die Teil der durch eine Führungseinrichtung 45 geführten Schieberplatte 44 ist. Der Ringeinsatz 36 ist im Querschnitt stufenförmig, insbesondere doppel-L-förmig ausgebildet und umfasst eine in montierter Position obere Schulter 48 und eine untere Schulter 49. Die obere Schulter 48 ist in Strömungsrichtung vorne und die untere Schulter 49 ist in Strömungsrichtung hinten angeordnet. Die beiden Schenkel 48a, 48b der oberen Schulter 48 begrenzen die vom Fluiddurchgang abgewandte Seite eines Aufnahmeraumes 37 für das elastische Element 25, wobei der radial erstreckte Schenkel 48a (Radialschenkel) als obere Anschlagfläche für das elastische Element 25, d.h. das im Aufnahmeraum 37 angeordnete Tellerfederpaket wirkt. Der axial erstreckte Schenkel 48b (Axialschenkel) ist länger ausgebildet als der Radialschenkel 48a, wobei die Schenkellänge allgemein von der Länge des elastischen Elementes 25 bestimmt ist.

Generell werden die Angaben radial oder axial auf den im Wesentlichen zylindrisch ausgebildeten Rohrstutzen 12 bzw. den Fluiddurchgang bezogen, wobei unter axial bzw. radial erstrecktem Schenkel ein Schenkel verstanden wird, dessen Haupterstreckung axial bzw. radial verläuft. Unter axialer bzw. radialer Wandung wird eine Wandung verstanden, die einen Raum in axialer bzw. radialer Richtung begrenzt.

Die beiden Schenkel 49a, 49b der unteren Schulter 49 begrenzen die vom Fluiddurchgang abgewandte Seite eines Aufnahmeraumes 39 für den Dichtsitz 14. Der Radialschenkel 49a ist kürzer ausgebildet als die an den Radialschenkel 49a angrenzende Seite des Dichtsitzes 14, so dass ein Abschnitt 41a des Dichtsitzes 14 über die untere Schulter 49 in Richtung des Fluiddurchganges radial hinausragt. Der hinausragende Abschnitt 41a des Dichtsitzes 14 bildet dabei eine dem Radialschenkel 48a der oberen Schulter 48 in Gegenüberstellung parallel angeordnete weitere Anschlagfläche für das elastische Element 25, so dass dieses zwischen der oberen Schulter 48 und dem Dichtsitz 14 mit einer vorgegebenen Vorspannung eingespannt ist. Im übrigen richten sich die Dimensionen der beiden Schenkel 49a, 49b der unteren Schulter 49 nach den Abmaßen des Dichtsitzes 14.

Generell fungiert also der stufenförmig bzw. doppel-L-förmig ausgebildete Ringeinsatz 36 als gehäuseseitige Begrenzung der beiden Aufnahmeräume 37, 39. Die fluidseitige Begrenzung der beiden Aufnahmeräume 37, 39 erfolgt durch einen Gehäusering 38, der mit einer Stirnfläche der oberen Schulter 48, insbesondere des Radialschenkels 48a verbunden ist, wie in Figur 5 ersichtlich. Die Außenwand 38a des Gehäuseringes 38 erstreckt sich parallel und konzentrisch sowohl zum Axialschenkel 48b der oberen Schulter 48 als auch zum Axialschenkel 49b der unteren Schulter 49. Die Innenwand 38b des Gehäuseringes 38 begrenzt den Rohrstutzen 12 und ist mit einer verschleißfesten Panzerung 46 plattiert. An dem in Strömungsrichtung unteren Rand des Gehäuseringes 38 ist die Schneidkante 35 vorgesehen.

Der Gehäusering 38 ist im wesentlichen L-förmig ausgebildet, wobei die Länge des Axialschenkels 38c des Gehäuseringes 38 so gewählt ist, dass die freie Außenwand 38a des Gehäuseringes 38 die beiden Axialschenkel 48b, 49b des Ringeinsatzes 36 in etwa überdeckt. Die Länge des Radialschenkels 38d des Gehäuseringes 38 entspricht etwa der bzw. ist etwas kürzer als die Länge des Radialschenkels 48a der oberen Schulter 48 des Ringeinsatzes 36.

Der stufenförmige Querschnitt des Ringeinsatzes 36 zusammen mit dem vorstehend beschriebenen L-förmigen Querschnitt des Gehäuseringes 38 begrenzt zwei im Querschnitt ebenfalls L-förmig angeordnete Aufnahmeräume 37, 39. Die Aufnahmeräume 37, 39 sind dementsprechend in Form zweier konzentrischer Ringspalte mit unterschiedlichen Innendurchmessern ausgebildet. Dabei sind die beiden Aufnahmeräume 37, 39 durch eine ringförmige Durchtrittsöffnung 39a verbunden, die durch den Dichtsitz 14, insbesondere durch den Abschnitt 41a des Dichtsitzes 14 verschlossen ist. Das elastische Element 25 gelangt durch die Durchtrittsöffnung 39a hindurch in Anlage mit dem Abschnitt 41a des Dichtsitzes 14 und beaufschlagt so den Dichtsitz mit der gewünschten Federkraft.

Außerdem ist aufgrund der vorstehend erläuterten Länge des Radialschenkels 38d des Gehäuseringes 38 dessen Stirnfläche vom Axialschenkel 49b der unteren Schulter 49 beabstandet, so dass eine weitere Durchtrittsöffnung 39b im Aufnahmeraum 39 für den Dichtsitz 14 gebildet ist, die radial weiter außen angeordnet ist, als die die Aufnahmeräume 37, 39 verbindende Durchtrittsöffnung 39a. Durch die weitere Durchtrittsöffnung 39b gelangt eine Dichtfläche 40 des Dichtsitzes 14 in Anlage mit dem jeweils abzudichtenden Maschinenelement (Rohrbrücke 22, Absperrplatten 16, 17).

Der Querschnitt des ringförmigen Dichtsitzes 14 ist im wesentlichen L-förmig ausgebildet, wobei die Dichtfläche 40 an der Stirnfläche des Axialschenkels des Dichtsitzes 14 vorgesehen ist. Der Dichtsitz 14 ist mit axialem Spiel in den Aufnahmeraum 39 eingesetzt, so dass durch Beaufschlagen des Dichtsitzes 14 mit einer Federkraft durch das elastische Element 25 die Dichtfläche 40 des Dichtsitzes gegen die Rohrbrücke 22, bzw die Absperrplatten 16, 17 gepresst wird.

Der Dichtsitz 14 umfaßt einen Führungsring 41, der mit einem konzentrisch angeordneten Dichtring 42 mit einem kleineren Innendurchmesser als der Führungsring 41 verschraubt ist. Der Dichtring 42 kann deshalb einfach vom Führungsring 41 gelöst werden, wenn dies für Wartungsarbeiten bzw. zu Reparaturzwecken erforderlich ist. Der Führungsring 41 ist zwischen der Außenwand 38a des Gehäuseringes 38 und der Innenwand des unteren Axialschenkels 49b des Ringeinsatzes 36 gleitbeweglich und axial geführt angeordnet. Überdies weist der Führungsring 41 eine Einrichtung 47 zur Einstellung des Axialspieles auf. Der mit dem Führungsring 41 verschraubte Dichtring 42 ist zwischen der Stirnfläche des Radialschenkels 38d des Gehäuseringes 38 und dem Axialschenkel 49b der unteren Schulter 49 des Ringeinsatzes 36 angeordnet.

Die Erfindung ist nicht auf den in Figur 5 dargestellten Ringeinsatzes 36 mit doppel-L-förmigen Querschnitt beschränkt, sondern umfaßt auch Bauteile mit anderen Querschnittsformen, die eine Aufnahme des elastischen Elementes 25 und des Dichtsitzes 14 ermöglichen. Beispielsweise ist es möglich, die Aufnahmeräume für das elastische Element und den Dichtsitz T-förmig auszugestalten, wobei der quer zur Längsrichtung des Rohrstutzens erstreckte Aufnahmeraum für den Dichtsitz und der koaxial zur Längsachse des Rohrstutzens erstreckte Aufnahmeraum für das elastische Element vorgesehen sind.

Die im Radialschenkel 48a der oberen Schulter 48 des Ringeinsatzes 36 vorgesehene Bohrung 43 zur Verbindung mit einem Spül- oder Sperrdampfanschluß kann nach den jeweiligen baulichen Gegebenheiten auch an anderer Stelle des Ringeinsatzes 36 angeordnet sein.

Die Sitzeinheit nach Figur 5 kann sowohl für den oberen Rohrstutzen 12 als auch für den unteren Rohrstutzen 13 verwendet werden.

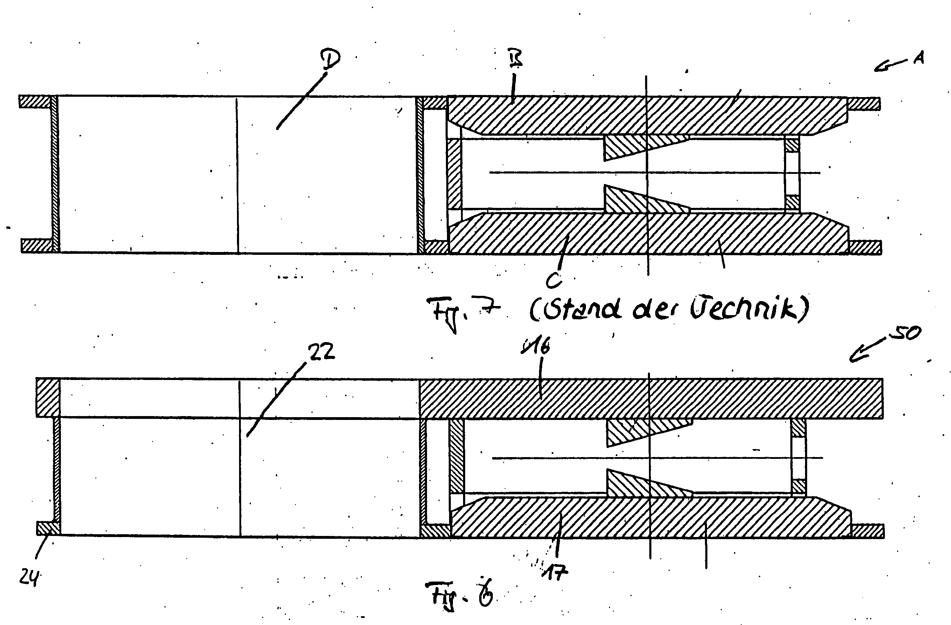

Ein einen Plattenkorb betreffendes Ausführungsbeispiel ist in Fig. 6 dargestellt. Dort ist im Längsschnitt ein Plattenkorb 50 mit seinen wichtigsten Bestandteilen gezeigt, wie er beispielsweise in einem Doppelplattenschieber nach den Fig. 1 bis Fig. 5 eingesetzt werden kann. Insofern werden alle Merkmale des Ausführungsbeispieles nach Fig. 6 auch im Zusammenhang mit den anhand der Fig. 1 bis 5 beschriebenen Ausführungsbeispiele offenbart. Überdies ist es auch möglich, den in Fig. 6 dargestellten Plattenkorb 50 in einem Doppelplattenschieber zu verwenden, der abweichend von den Ausführungsbeispielen der Fig. 1 bis Fig. 5 hergestellt ist.

Zur Erläuterung des zugrunde liegenden Problems wird zunächst der Plattenkorb nach Fig. 7 beschrieben, der ein Beispiel für einen herkömmlichen Plattenkorb darstellt. In Fig. 7 ist ersichtlich, dass der Plattenkorb A zwei Absperrplatten B, C aufweist, die radial neben einer Rohrbrücke D angeordnet sind. In Schließstellung versperren die beiden Absperrplatten B, C den Fluiddurchgang des Doppelplattenschiebers. Zum Öffnen des Doppelplattenschiebers wird die Rohrbrücke D zwischen die beiden Rohrstutzen 12, 13 bewegt. Die beiden Absperrplatten B, C sind lose in dem Plattenkorb A angeordnet.

Dieser herkömmliche Plattenkorb nach Fig. 7 hat den Nachteil, dass sich Koksstaub im Spalt zwischen der oberen Absperrplatte B und dem Plattenkorb A ablagert.

Dieser Nachteil wird dadurch vermieden, dass wenigstens eine der Absperrplatten 16, 17 insbesondere die obere Absperrplatte 16 einteilig mit dem Plattenkorb 50 ausgebildet ist, wie beispielhaft in Fig. 6 verdeutlicht. Dadurch wird erreicht, dass die obere Absperrplatte 16 durchgehend die Plattenkorboberfläche bildet, so dass kein Spalt vorhanden ist, in den Koksstaub eindringend kann. Dies bedeutet, dass die Rohrbrücke 22 keinen oberen Dichtring 23 aufweist, sondern durch einen einteilig mit der oberen Absperrplatte 16 ausgebildeten Ring begrenzt ist, wie in Fig. 6 dargestellt. Dabei ist die Absperrplattenoberfläche, d.h. die Plattenkorboberseite ganzflächig als Dichtfläche bearbeitet und verschleißfest gepanzert. Die im Gebrauch untere Absperrplatte 17 kann als lose Schieberplatte ausgebildet sein, da aufgrund der einteiligen Ausbildung der oberen Absperrplatte 16 mit dem Plattenkorb 50 nicht die Gefahr besteht, dass Koksstaub ins Innere des Plattenkorbes 50 und somit in den Bereich der unteren Absperrplatte 17 gelangen kann. Die untere Absperrplatte 17 kann aber auch einteilig mit dem Plattenkorb 50 ausgebildet sein, so dass der untere Dichtring 24 durch einen einteilig mit der unteren Absperrplatte 17 ausgebildeten Ring ersetzt ist, wobei die Plattenkorbunterseite komplett feinst bearbeitet und verschleißfest gepanzert ist.

Die obere Absperrplatte 16 kann beheizbar ausgeführt sein, wodurch ein Verkleben der Platte 16 mit dem Inhalt der Kokstrommel weitgehend vermieden wird. Diese Ausführung wird sowohl unabhängig als auch im Zusammenhang mit sämtlichen in dieser Anmeldung beschriebenen Ausführungsbeispielen offenbart.

### Bezugszeichen:

- 10: Doppelplattenschieber
- 11: Schiebergehäuse
- 12: oberer Rohrstutzen
- 13: unterer Rohrstutzen
- 14: oberer Gehäusedichtsitz
- 15: unterer Gehäusedichtsitz
- 16: obere Absperrplatte
- 17: untere Absperrplatte
- 18: oberer Dichtring
- 19: unterer Dichtring
- 20: Innenkeil
- 21: Betätigungsstange
- 22: Rohrbrücke
- 23: oberer Dichtring
- 24: unterer Dichtring
- 25: Tellerfederpaket, elastisches Element
- 26: Auflagefläche
- 27: Inneres des Schiebergehäuses
- 28: Anschluß
- 29: Leitplatte
- 30: Wartungsöffnung
- 31: Wartungsöffnung
- 32: Kühlmitteleinlaß
- 33: Spül- und Sperrdampfkanal
- 34: Anschlußstutzen
- 35: Schneidkante
- 36: Ringeinsatz
- 37: Aufnahmeraum für das elastische Element
- 37a: Axiale Wandung des Aufnahmeraumes
- 37b: Radiale Wandung des Aufnahmeraumes
- 38: Gehäusering
- 38a: Außenwand des Gehäuserings
- 38b: Innenwand des Gehäuserings
- 38c: Axialschenkel des Gehäuserings
- 38d: Radialschenkel des Gehäuserings
- 39: Aufnahmeraum für den Dichtsitz
- 39a: Durchtrittsöffnung für das elastische Element
- 39b: Durchtrittsöffnung für eine Dichtfläche des Dichtsitzes
- 40: Dichtfläche des Dichtsitzes
- 41: Führungsring
- 41a: Abschnitt des Dichtsitzes
- 42: Dichtring des Dichtsitzes
- 43: Bohrung zur Verbindung mit einem Spül- oder Sperrdampfanschluß
- 44: Schieberplatte
- 45: Führung
- 46: Plattierung
- 47: Einrichtung zur Einstellung des axialen Spieles des Dichtsitzes
- 48: Obere Schulter des Ringeinsatzes
- 48a: Radialschenkel der oberen Schulter
- 48b: Axialschenkel der oberen Schulter
- 49: Untere Schulter des Ringeinsatzes
- 49a: Radialschenkel der unteren Schulter
- 49b: Axialschenkel der unteren Schulter
- 50: Plattenkorb

- A: Plattenkorb (Stand der Technik)
- B: obere Absperrplatte
- C: untere Absperrplatte
- D: Rohrbrücke

## Patentansprüche

1. Doppelplattenschieber (10), dessen Absperrplatten (16, 17) durch eine Betätigungsstange (21) verschiebbar sind, und der mit einer Rohrbrücke (22) versehen ist, welche zwei Dichtringe (23, 24) aufweist, die in der Offenstellung des Schiebers mit korrespondierenden Gehäusedichtsitzen (14, 15) des Schiebergehäuses (11) in Wirkeingriff stehen,
**dadurch gekennzeichnet, dass**
wenigstens einer der beiden Gehäusedichtsitze in Offenstellung des Schiebers (10) durch die Wirkung eines elastischen Elementes (25) an dem bzw. den der Rohrbrücke (22) zugeordneten Dichtring(en) (23, 24) und in Geschlossenstellung des Schiebers am Umfangsrand der Absperrplatten(n) (16, 17) unter vorbestimmtem Druck anliegt, wobei das elastische Element (25) und der Dichtsitz (14, 15) zu einer, als ein Bauteil handhabbaren Sitzeinheit kombiniert sind, die mit dem Schiebergehäuse (11) verbindbar ist.

2. Schieber nach Anspruch 1,
**dadurch gekennzeichnet, daß**
das elastische Element wenigstens drei gleichmäßig über den Umfang des Gehäusedichtsitzes bzw. der Gehäusedichtsitze (14, 15) verteilt angeordnete Feder-, insbesondere Tellerfederpakete (25) umfaßt.

3. Schieber nach Anspruch 1 oder Anspruch 2,
**dadurch gekennzeichnet, daß**
wenigstens die Innenseiten eines oder beider am Schiebergehäuse angeschlossenen Rohrstutzen (12, 13) und/oder der Rohrbrücke (22), d.h. also mindestens deren dem durch den Doppelplattenschieber (10) strömenden Medium zugewandte Seite(n) gehärtet oder mit einer verschleiß- und korrosionsfesten Hartpanzerung versehen ist bzw. sind.

4. Schieber nach einem der vorangehenden Ansprüche,
**dadurch gekennzeichnet, daß**
wenigstens einer der den Absperrplatten (16, 17) zugewandten Umfangsränder der Rohrstutzen (12, 13) als Schneidkante (35) ausgebildet ist.

5. Schieber nach Anspruch 4,
**dadurch gekennzeichnet, daß**
zwischen Gehäusedichtsitz (14, 15) und Schneidkante (35) Spül- bzw. Sperrdampf über einen Spül- und Sperrdampfkanal (33) einleitbar ist.

6. Schieber nach einem der vorangehenden Ansprüche,
**dadurch gekennzeichnet, daß**
der bzw. die Gehäusedichtsitze (14, 15) relativ zum zugeordneten Rohrstutzen (12, 13) parallel zu dessen Erstreckungsrichtung bzw. axial bewegbar ausgebildet ist bzw. sind.

7. Schieber nach einem der vorangehenden Ansprüche,
**dadurch gekennzeichnet, daß**
wenigstens einer der Gehäusedichtsitze (14, 15) entfernbar und somit austauschbar ausgebildet ist, wobei nach Entfernung eines Gehäusedichtsitzes (14, 15) ein Zugriff auf das elastische Element (25) möglich ist.

8. Schieber nach einem der vorangehenden Ansprüche,
**dadurch gekennzeichnet, daß**
bei Anordnung von zwei Absperrplatten (16, 17) diese in der geschlossenen Stellung des Schiebers (10) über mittels einer Kugel zentrierte Keilstücke (20) gegen die zugeordneten Dichtflächen preßbar sind.

9. Schieber nach einem der vorangehenden Ansprüche,
**dadurch gekennzeichnet, daß**
die den Absperrplatten (16, 17) zugeordnete Betätigungsstange (21) sich fluiddicht in das Schiebergehäuse (11) hineinerstreckt.

10. Schieber nach einem der vorangehenden Ansprüche,
**dadurch gekennzeichnet, daß**
am Schiebergehäuse (11) wenigstens ein Anschluß (28) zur Verbindung mit einer Druckgas- oder Spül- bzw. Sperrdampfquelle vorgesehen ist, über den Druckgas oder Spül- bzw. Sperrdampf zum Spülen bzw. zur zusätzlichen Abdichtung des Schiebergehäuses (11) bereitstellbar ist.

11. Schieber nach einem der vorangehenden Ansprüche,
**dadurch gekennzeichnet, daß**
das Schiebergehäuse wenigstens eine durch einen Deckel verschließbare Wartungsöffnung (30, 31) aufweist.

12. Schieber nach Anspruch 1,
**dadurch gekennzeichnet, daß**
die Sitzeinheit einen mit dem Schiebergehäuse (11) verbindbaren Ringeinsatz (36) umfasst, in dem das elastische Element (25) und der Dichtsitz (14, 15) angeordnet sind.

13. Schieber nach Anspruch 12,
**dadurch gekennzeichnet, daß**
der Ringeinsatz (36) einen Aufnahmeraum (37) für das elastische Element (25) aufweist, wobei eine axiale Wandung (37a) des Aufnahmeraumes (37) durch den Dichtsitz (14, 15) gebildet ist, der als eine Anschlagfläche für das elastische Element (25) wirkt.

14. Schieber nach Anspruch 13,
**dadurch gekennzeichnet, daß**
eine radiale Wandung (37b) des Aufnahmeraumes (37) für das elastische Element (25) durch einen Gehäusering (38) gebildet ist, der den jeweiligen Rohrstutzen (12, 13) in Umfangsrichtung zumindest abschnittsweise begrenzt.

15. Schieber nach einem der Ansprüche 12 bis 14,
**dadurch gekennzeichnet, daß**
der Ringeinsatz (36) einen Aufnahmeraum (39) für den Dichtsitz (14, 15) aufweist, wobei eine Durchtrittsöffnung (39a) im Aufnahmeraum (39) für den Dichtsitz (14, 15) vorgesehen ist, die eine Wirkverbindung zwischen dem Dichtsitz (14, 15) und dem elastischen Element (25) ermöglicht.

16. Schieber nach Anspruch 15,
**dadurch gekennzeichnet, daß**
der Dichtsitz (14, 15) in dem Aufnahmeraum (39) mit axialem Spiel angeordnet ist.

17. Schieber nach einem der Ansprüche 1 oder 12 bis 16,
**dadurch gekennzeichnet, daß**
der Dichtsitz (14, 15) einen Führungsring (41) und einen konzentrisch angeordneten Dichtring (42) aufweist, wobei der Dichtring (42) und der Führungsring (41) lösbar verbunden sind.

18. Schieber nach einem der Ansprüche 12 bis 17,
**dadurch gekennzeichnet, daß**
der Ringeinsatz (36) wenigstens eine Bohrung (43) zur Verbindung mit einem Spül- oder Sperrdampfanschluß aufweist.

19. Schieber nach einem der Ansprüche 1 bis 18,
**dadurch gekennzeichnet, daß**
wenigstens eine der Absperrplatten (16, 17), insbesondere die im Gebrauch obere Absperrplatte (16) einteilig mit einem Plattenkorb (50) ausgebildet ist.

20. Schieber nach Anspruch 19,
**dadurch gekennzeichnet, daß**
die Oberfläche der einteilig mit dem Plattenkorb (50) ausgebildeten Absperrplatte (16, 17) ganzflächig als Dichtfläche bearbeitet und verschließfest gepanzert ist.

21. Schieber nach einem der Ansprüche 1 bis 20,
**dadurch gekennzeichnet, daß**
zumindest die im Gebrauch obere Absperrplatte (16, 17) beheizbar ist.

## Claims

1. Double-plate gate valve (10), of which the locking plates (16, 17) can be displaced by an actuating rod (21), and which is provided with a pipe bridge (22), which comprises two sealing rings (23, 24), which are disposed in the open position of the gate valve in active engagement with corresponding housing sealing seatings (14, 15) of the gate-valve housing (11),
**characterised in that**,
through the action of a resilient element (25), at least one of the two housing sealing seatings contacts the sealing ring(s) associated with the pipe bridge (22) in the open position of the gate valve (10) and, in the closed position of the gate valve, contacts the circumferential edge of the locking plate(s) (16, 17) with a predetermined pressure, wherein the resilient element (25) and the sealing seating (14, 15) are combined to form a seating unit, which can be handled as one component and connected to the gate-valve housing (11).

2. Gate valve according to claim 1,
**characterised in that**
the resilient element comprises at least three spring assemblies, especially plate-spring assemblies, (25) distributed uniformly around the circumference of the housing sealing seating and/or seatings (14, 15).

3. Gate valve according to claim 1 or claim 2,
**characterised in that**
at least the internal sides of one or both pipe connections (12, 13) connected to the gate-valve housing and/or of the pipe bridge (22), that is to say, at least their side(s) facing towards the medium flowing through the double-plate gate valve (10), are hardened or provided with a wear-resistant and corrosion-resistant hard plating.

4. Gate valve according to any one of the preceding claims,
**characterised in that**
at least one of the circumferential edges of the pipe connections (12, 13) facing towards the locking plates (16, 17) is designed as a cutting edge (35).

5. Gate valve according to claim 4,
**characterised in that**
rinsing vapour or locking vapour can be introduced between the housing sealing seating (14, 15) and the cutting edge (35) via a rinsing-vapour or locking-vapour duct (33).

6. Gate valve according to any one of the preceding claims,
**characterised in that**
the housing sealing seating(s) (14, 15) is/are designed to be displaceable either in an axial direction or parallel relative to the direction of extension of the associated pipe connection (12, 13).

7. Gate valve according to any one of the preceding claims,
**characterised in that**
at least one of the housing sealing seatings (14, 15) is designed to be removable and therefore replaceable, wherein access to the resilient element (25) is possible after the removal of a housing sealing seating (14, 15).

8. Gate valve according to any one of the preceding claims,
**characterised in that**,
with an arrangement of two locking plates (16, 17), in the closed position of the gate valve (10), the locking plates can be pressed against the associated sealing surfaces via wedge elements (20) centred by means of a ball.

9. Gate valve according to any one of the preceding claims,
**characterised in that**
the actuating rod (21) associated with the locking plates (16, 17) extends into the gate-valve housing (11) in a fluid-tight manner.

10. Gate valve according to any one of the preceding claims,
**characterised in that**
at least one connection (28) for connection to a supply for compressed gas or rinsing vapour or locking vapour is provided in the gate-valve housing (11), by means of which connection compressed gas or rinsing vapour or locking vapour can be provided for rinsing or additional sealing of the gate-valve housing (11).

11. Gate valve according to any one of the preceding claims,
**characterised in that**
the gate-valve housing provides at least one maintenance opening (30, 31), which can be closed with a cover.

12. Gate valve according to claim 1
**characterised in that**
the seating unit comprises an annular insert (36), which can be connected to the gate-valve housing (11), in which annular insert the resilient element (25) and the sealing seating (14, 15) are arranged.

13. Gate valve according to claim 12,
**characterised in that**
the annular insert (36) provides a retaining space (37) for the resilient element (25), wherein an axial wall (37a) of the retaining space (37) is formed by the sealing seating (14, 15), which acts as a stopping surface for the resilient element (25).

14. Gate valve according to claim 13,
**characterised in that**
a radial wall (37b) of the retaining space (37) for the resilient element (25) is formed by a housing ring (38), which limits the respective pipe connection (12, 13) in the circumferential direction at least in portions.

15. Gate valve according to any one of claims 12 to 14,
**characterised in that**
the annular insert (36) provides a retaining space (39) for the sealing seating (14, 15), wherein a through opening (39a), which allows an active connection between the sealing seating (14, 15) and the resilient element (25), is provided in the retaining space (39) for the sealing seating (14, 15).

16. Gate valve according to claim 15,
**characterised in that**
the sealing seating (14, 15) is arranged with an axial play within the retaining space (39).

17. Gate valve according to any one of claims 1 or 12 to 16,
**characterised in that**
the sealing seating (14, 15) provides a guide ring (41) and a concentrically-arranged sealing ring (42), wherein the sealing ring (42) and the guide ring (41) are connected in a detachable manner.

18. Gate valve according to any one of claims 12 to 17,
**characterised in that**
the annular insert (36) provides at least one borehole (43) for connection to a rinsing-vapour or locking-vapour connection.

19. Gate valve according to any one of claims 1 to 18,
**characterised in that**
at least one of the locking plates (16, 17), in particular the locking plate (16) which is uppermost during use, is designed in one piece with a plate holder (50).

20. Gate valve according to claim 19,
**characterised in that**
the surface of the locking plate (16, 17) designed in one piece with the plate holder (50) is machined over its entire surface area as a sealing surface and armour-plated in a wear-resistant manner.

21. Gate valve according to any one of claims 1 to 20,
**characterised in that**
at least the locking plate (16, 17), which is uppermost during use, is heatable.

## Revendications

1. Vanne à tiroir composé de deux plaques (10), dont les plaques d'obturation (16, 17) peuvent être déplacées par une tige d'actionnement (21), et qui est dotée d'un pont de tubulures (22) présentant deux bagues d'étanchéité (23, 24) qui, en position d'ouverture de la vanne, coopèrent avec des sièges d'étanchéité correspondants (14, 15) du corps de vanne (11),
**caractérisée en ce qu'**au moins un des deux sièges d'étanchéité du corps de vanne (11) coopère en appui sous une pression prédéterminée avec la ou les bagues d'étanchéité (23, 24) associées au pont de tubulures (22) sous l'action d'un élément élastique (25) lorsque la vanne (10) est en position d'ouverture et avec le bord périphérique de la ou des plaques d'obturation (16, 17) lorsque la vanne est en position de fermeture, l'élément élastique (25) et le siège d'étanchéité (14, 15) étant combinés en une unité de siège apte à être manipulée comme un composant unique.

2. Vanne selon la revendication 1, **caractérisée en ce que** l'élément élastique comprend au moins trois paquets de ressorts, notamment de rondelles ressorts (25), uniformément répartis sur la périphérie du ou des sièges d'étanchéité (14, 15).

3. Vanne selon la revendication 1 ou la revendication 2, **caractérisée en ce qu'**au moins les faces intérieures d'une ou des deux tubulures (12, 13) raccordées au corps de vanne et/ou du pont de tubulures (22), c'est-à-dire au moins leur(s) face(s) en regard du milieu traversant la vanne à tiroir composé de deux plaques (10), sont durcies ou pourvues d'un blindage dur résistant à l'usure et à la corrosion.

4. Vanne selon l'une quelconque des revendications précédentes, **caractérisée en ce qu'**au moins un des bords périphériques des tubulures (12, 13) qui sont orientés face aux plaques d'obturation (16, 17) est conçu sous la forme d'une arête (35).

5. Vanne selon la revendication 4, **caractérisée en ce que** de la vapeur de balayage ou de la vapeur de barrage peut être amenée entre le siège d'étanchéité (14, 15) et l'arête (35) via un canal de vapeur de balayage et de vapeur de barrage (33).

6. Vanne selon l'une quelconque des revendications précédentes, **caractérisée en ce que** le ou les sièges d'étanchéité (14, 15) sont conçus mobiles par rapport à la tubulure associée (12, 13) parallèlement à sa dimension principale ou axialement.

7. Vanne selon l'une quelconque des revendications précédentes, **caractérisée en ce qu'**au moins un des sièges d'étanchéité (14, 15) est amovible et donc échangeable, étant entendu qu'il est possible d'accéder à l'élément élastique (25) après retrait d'un siège d'étanchéité (14, 15).

8. Vanne selon l'une quelconque des revendications précédentes, **caractérisée en ce qu'**en cas d'agencement de deux plaques d'obturation (16,17), celles-ci peuvent être plaquées contre les surfaces d'étanchéité associées par des coins (20) centrés au moyen d'une bille lorsque la vanne (10) est en position de fermeture.

9. Vanne selon l'une quelconque des revendications précédentes, **caractérisée en ce que** la tige d'actionnement (21) associée aux plaques d'obturation (16, 17) s'engage dans le corps de vanne (11) de manière étanche aux fluides.

10. Vanne selon l'une quelconque des revendications précédentes, **caractérisée en ce qu'**il est prévu sur le corps de vanne (11) au moins un raccord (28) de liaison avec une source de gaz comprimé ou de vapeur de balayage ou de vapeur de barrage, raccord par lequel ledit gaz comprimé ou ladite vapeur de balayage ou de barrage peut être mis à disposition pour balayer ou étancher de manière complémentaire le corps de vanne (11).

11. Vanne selon l'une quelconque des revendications précédentes, **caractérisée en ce que** le corps de vanne présente au moins une ouverture de maintenance (30, 31) apte à être obturée par un capot.

12. Vanne selon la revendication 1, **caractérisée en ce que** l'unité de siège comprend un insert annulaire (3 6) apte à être relié au corps de vanne (11) et dans lequel sont agencés l'élément élastique (25) et le siège d'étanchéité (14, 15).

13. Vanne selon la revendication 12, **caractérisée en ce que** l'insert annulaire (36) présente un logement (37) destiné à recevoir l'élément élastique (25), une paroi axiale (37a) du logement (37) étant formée par le siège d'étanchéité (14, 15) qui fait office de butée pour l'élément élastique (25).

14. Vanne selon la revendication 13, **caractérisée en ce qu'**une paroi radiale (37b) du logement (37) de l'élément élastique (25) est formée par un anneau de logement (38), qui limite au moins partiellement les différentes tubulures (12, 13) dans la direction circonférentielle.

15. Vanne selon l'une quelconque des revendications 12 à 14, **caractérisée en ce que** l'insert annulaire (36) présente un logement (39) destiné à recevoir le siège d'étanchéité (14, 15), une ouverture de passage (39a) étant prévue dans le logement (39) du siège d'étanchéité (14, 15) pour permettre la coopération entre le siège d'étanchéité (14, 15) et l'élément élastique (25).

16. Vanne selon la revendication 15, **caractérisée en ce que** le siège d'étanchéité (14, 15) est agencé dans le logement (39) avec un jeu axial.

17. Vanne selon l'une quelconque des revendications 1 ou 12 à 16, **caractérisée en ce que** le siège d'étanchéité (14, 15) présente une bague de guidage (41) et une bague d'étanchéité (42) agencée concentriquement, la bague d'étanchéité (42) et la bague de guidage (41) étant reliées de manière amovible.

18. Vanne selon l'une quelconque des revendications 12 à 17, **caractérisée en ce que** l'insert annulaire (36) présente au moins un perçage (43) pour assurer la liaison avec un raccord de vapeur de balayage ou de barrage.

19. Vanne selon l'une quelconque des revendications 1 à 18, **caractérisée en ce qu'**une au moins des plaques d'obturation (16, 17), notamment la plaque d'obturation (16) qui se trouve en haut à l'utilisation, est formée d'un seul tenant avec une cage de plaque (50).

20. Vanne selon la revendication 19, **caractérisée en ce que** la surface de la plaque d'obturation (16, 17) formée d'un seul tenant avec la cage de plaque (50) est intégralement traitée comme une surface d'étanchéité et dotée d'un blindage résistant à l'usure.

21. Vanne selon l'une quelconque des revendications 1 à 20, **caractérisée en ce qu'**au moins la plaque d'obturation (16, 17) qui se trouve en haut à l'utilisation peut être chauffée.
